Europäisches Patentamt

European Patent Office

Office européen des brevets

(11) Publication number: **0 006 022**
**B1**

(12) **EUROPEAN PATENT SPECIFICATION**

(45) Date of publication of patent specification: **25.05.83**

(51) Int. Cl.³: **G 01 B 7/00, G 01 B 3/00**

(21) Application number: **79301031.5**

(22) Date of filing: **01.06.79**

(54) Solid surface detecting and measuring device and method.

(30) Priority: **06.06.78 JP 77591/78**
**05.08.78 JP 95976/78**
**05.08.78 JP 108225/78**
**22.12.78 JP 162352/78**

(43) Date of publication of application:
**12.12.79 Bulletin 79/25**

(45) Publication of the grant of the patent:
**25.05.83 Bulletin 83/21**

(84) Designated Contracting States:
**DE FR GB IT**

(56) References cited:
**DE - A - 1 473 799**
**DE - B - 1 287 334**
**DE - B - 1 814 984**
**GB - A - 896 491**
**GB - A - 1 013 186**
**GB - A - 1 087 475**
**GB - A - 1 250 537**
**GB - A - 2 005 022**
**GB - A - 2 006 435**

(73) Proprietor: **INOUE-JAPAX RESEARCH INCORPORATED**
**5289 Aza Michimasa Nagatsudamachi Midoriku Yokohamashi Kanagawaken (JP)**

(72) Inventor: **Inoue, Kiyoshi**
**3-16-8 Kamiyoga Setagayaku**
**Tokyo (JP)**

(74) Representative: **Saunders, Harry**
**SAUNDERS & DOLLEYMORE 2 Norfolk Road**
**Rickmansworth Hertfordshire WD3 1JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Solid surface detecting and measuring device and method

The present invention relates to a solid surface detecting device and method for use in a solid surface position measuring system, which device and method involve the use of a position-detecting or sensing head, stylus, feeler, or probe (referred to hereinafter for the sake of simplicity as a 'probe') carried on a support means and adapted to be moved thereby so as to advance a surface sensing tip of said probe progressively towards and into a predetermined contact or proximity relationship with a solid (i.e. rigid) surface thereby to measure or determine the position of said surface, or a size or length thereon, or a distance of a point on said surface from others or from a reference point, and a contact responsive means for detecting when such a said relationship is established between said surface sensing tip and said surface.

One such sensing head as used in a conventional position measuring system has, in use, been continuously displaced (i.e. scanned) over a solid surface that was being measured (hereafter referred to as the 'sensed surface'), and said contact responsive means has been arranged to sense the actual physical contact, or contact pressure, between said surface sensing tip and the sensed surface. However, with such an arrangement difficulties have been encountered in determining precisely when a given form of said contact or proximity relationship has been first established, especially when the sensing and sensed surfaces have become so close together that the rate of change of the distance between those surfaces or of the contact pressure between such surfaces is very small, or else where measurement of the contact pressure cannot be relied upon.

The present invention seeks to provide a means and a method for ensuring increased accuracy and reliability in detecting when a said relationship is first established between the surface sensing tip of the probe and the sensed surface as such tip and sensed surface approach one another.

From the British Patent Specification GB—A—1 250 537, it is known to sense the rising level of a particulate fluid material (such as a powder or dust) by detecting the vibration-damping effect exerted by such fluid material when the level of such material rises to a datum at which that material engulfs the lowermost transversely-vibrating tips of two vertical probes. The self-induced and self-maintained vibrations of the probe tips are rapidly halted by such damping effect, and an electrical output signal indicative of the change of the probe tips from the vibratory to the non-vibratory state signifies that the datum level has been reached by said fluid material. Such an arrangement is not suited or intended to provide very high accuracy measurements relating to an article having solid surfaces, and give no guidance to the person seeking to make highly accurate measurements of the position of a solid surface.

From the German Patent Specification DE—B—1 287 334, it is known to test various physical properties of a test piece material by externally inducing in an elongate test probe longitudinal vibrations, and by applying one end of the vibrating test probe under a given biasing force to the test piece. The resulting change in the resonant frequency of the test probe when applied to the test piece is used to provide information concerning specific physical parameters of the test piece material. Such a vibrating test probe may also be used to determine the magnitude of a force, by subjecting the probe longitudinally to that force, and by noting the change in resonant frequency of the test probe when so loaded. However, in neither this prior art specification, nor in the earlier one is there any proposal or suggestion for detecting contact of a solid-surface sensing probe tip with a solid surface to be sensed, when said sensing tip is being progressively advanced towards such surface in such a way that high accuracy measurements of the position of said solid surface can be made.

According to a first aspect of the present invention, a solid-surface detecting device as aforesaid is characterised in that said contact responsive means comprises

(a) a vibration means for inducing when energised by an external source, in said probe longitudinal vibrations which reciprocate repetitively said surface sensing tip of said probe towards and away from the solid surface to be sensed by said tip, and with an amplitude in a range of 0.1 to 10 micro-meters and

(b) a response means responsive to modification in the mode of vibration of said probe, and arranged to produce an output signal in response to a modification in the mode of vibration of said probe which occurs when said tip of said probe on being advanced by said support means relatively to said sensed surface first establishes a said relationship with the sensed solid surface.

The detection of that change or modification in the mode of vibration, and the consequent production of said output signal, enable the position of the probe, and hence of the solid surface, to be noted with accuracy, and moreover reliably and repeatably, since the probe is that moment not subjected to any unknown pressure or deflection in contacting the solid surface.

According to a second aspect of the present invention, a method of detecting a solid surface which comprises (a) relatively advancing towards one another a probe and a said solid surface so as to move a surface sensing tip of said probe towards and into a predetermined contact or proximity relationship with the solid surface, and (b) detecting when such a relationship is established between said surface sensing top and said surface, is characterised by:—

(i) vibrationally energising said probe so as to reciprocate repetitively said surface sensing tip of said probe towards and away from said solid surface, and with an amplitude in the range 0.1 to 10 micro-metres;

(ii) sensing modification of the mode of vibration of said probe; and

(iii) producing an output signal when on advancement of said sensing surface tip relative to said solid surface, a said modification signifies that said tip has established a said relationship with said solid surface.

Thus, by means of such a device and method the probe tip can be positioned reliably, repeatably and accurately closely adjacent a solid surface the position of which is to be determined.

Specifically, the vibration means may include an electromechanical transducer, which may be of magnetostrictive or electrostrictive type, attached to said probe and energisable by a power supply to impart to said probe a high-frequency vibration of a frequency in the range between 1 kHz and 50 kHz, preferably at least 10 kHz.

The device may include modifying means, responsive to change in proximity of the probe to the surface to be measured, for manually or automatically modifying the amplitude of vibration imparted to the probe. The modifying means may include means for modifying the output frequency and/or output power of the high-frequency power supply to control the amplitude of vibration imparted to the probe. The modifying means may be adapted to respond to change in the resonant frequency of vibration of the probe when in contact or proximity with the surface, for controlling the output frequency and/or power level of the high-frequency power supply.

The device may further include feed means for advancing said probe tip toward said surface, said feed means including an electric motor and a drive circuit therefor, and display means for indicating rotary displacement of said electric motor, said drive circuit being associated with said response means for receiving said output signal in response to establishment of said predetermined contact or proximity relationship between said probe tip and said surface to deactivate said electric motor, thereby halting the advancement of said probe tip. The electric motor may be a D.C. motor, having an encoder operatively connected therewith to convert a rotary displacement of said D.C. motor into a series of pulses. Alternatively, the electric motor may be a stepping motor energisable by a series of drive pulses. The display means may include counter means for accumulating the pulses and means for converting the accumulated pulses into a numerical display.

The device may also include a measuring system for measuring the position of a said probe or a drive shaft for said probe, the system comprising: spindle means movable axially in parallel with said probe or shaft; a first electrode carried on said probe or shaft; a second electrode carried on said spindle means, said first and second electrodes being arranged to be juxtaposed with one another to form a gap therebetween; a power supply for applying an electric potential across said gap; motor means for displacing said spindle means; means for sensing the voltage across said gap to produce a control signal representing the distance between said electrodes, thereby controlling said motor means; and display means responsive to the rotation of said motor means to produce a numerical display representing the rotary displacement of said motor means.

One embodiment of the present invention relates to methods and apparatus for measuring the position of a solid surface of an article relative to a reference position, which methods and apparatus involve the use of contact detecting methods and devices according to the present invention. Those methods and apparatus, together with other features of the present invention, will appear from the description and claims that follow.

Various embodiments of the invention will now be described in detail, and by way of example only, with reference to the accompanying diagrammatic drawings, in which:—

Figure 1 is an elevational view, partly schematic, illustrating a sensing probe according to the present invention;

Figures 2 to 4 are also schematic elevational views showing further embodiments of the present invention;

Figure 5 is a circuit diagram of a control circuit for use with the embodiment of Figure 4;

Figure 6 is a longitudinal elevational view, partly schematic, showing a sensor embodying the present invention; and

Figure 7 is a diagrammatic longitudinal view, partly schematic, illustrating a further embodiment of the present invention.

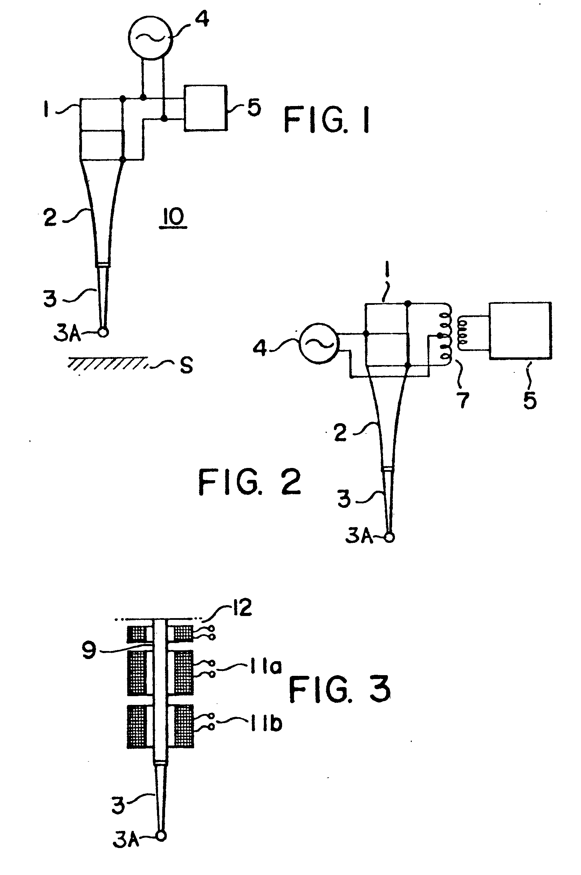

Referring to Figure 1, a sensing head or probe 10 in accordance with the present invention comprises a transducer 1, a horn 2 and a feeler or sensing tip 3 having a spherical end 3A. The transducer 1 which may be composed of quartz, AlFe, Ni family, $PbTiO_3$ family, $Pb(TiZr)O_3$ family or any other element of magnetostrictive or piezoelectric or electrostrictive type is energized by a high-frequency power supply 4 to provide a high-frequency vibration in a sonic or preferably ultrasonic range, which is propagated via the horn 2 to the sensing tip 3 so that a small vibration is imparted to the latter with an amplitude of 0.1 to 1 $\mu$m and a frequency of 10 to 50 kHz although the vibration may also have a greater amplitude of 5 to 10 $\mu$m and a

lower frequency of 2 to 3 kHz. In general, under no load conditions, the amplitude may be between 0.1 to 10 $\mu$m and a frequency between 1 and 50 kHz although a higher frequency in a megacycle range may sometimes be employed. Also connected with the transducer 1 is a detector 5 responsive to a change in the mode of vibration generated in the sensing tip 3.

When there is nothing in the direct proximity of the feeler 3, there will be no substantial change in the mode of vibration caused in the sensing tip 3 which will then be in vibration at an amplitude and frequency preset at the source 4. When the feeler 3 becomes proximate or comes in a contacting relationship with a surface $S$ or object to be detected, there results a change or modification in the mode of vibration, as a function of closeness or the degree of contact between the vibrating tip 3 and the surface or object, which can be sensed by the detector 5.

Because of the smallness of the amplitude of vibration imparted, the feeler 3 remains substantially still and can be displaced and swept over the surface $S$ with due precision in the usual manner for scanning purposes. The feeler 3 continues vibration, reciprocating toward and away from the surface $S$ with a small amplitude at a high-frequency and, when brought into a contacting relationship with the surface $S$, provides a sudden change in vibrational mode accompanying the establishment of such condition which can be detected with high precision and reliability by the detector 5.

Figure 2 shows a modification of the vibrational sensing head 10 in which a transformer 7 constituting a voltage doubler is connected between the transducer 1 and the detector 5 to provide an intensified sensing signal for detection by the latter.

Figure 3 shows another modification of the vibrational sensing head 10 in which the transducer comprises a rod-shaped magnetostrictive element 9 of AlFe or Ni family energizable by a pair of surrounding coils 11$a$, 11$b$ divided axially of the vibratile rod 9 to apply a resulting magnetostrictive vibration to the sensing tip 3. Coaxially with the energizing coils 11$a$, 11$b$ a sensing coil 12 is provided responsive to a change in inductance accompanying a change in magnetic moment $\mu$ of the transducer 1 which occurs when a change in vibrational mode is experienced by the latter.

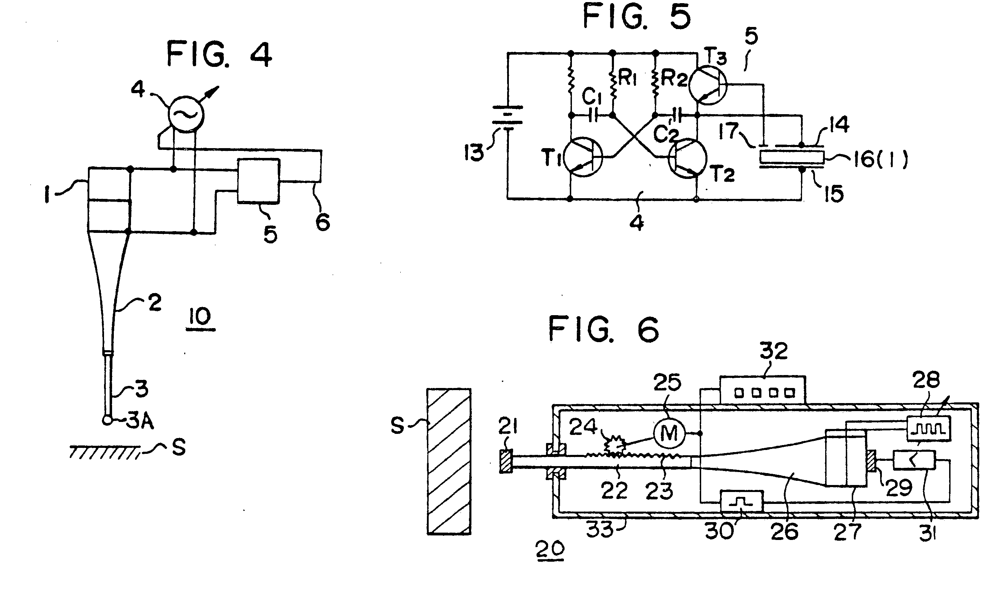

Figure 4 shows a further modified embodiment of the invention in which the detector circuit 5 has an output terminal 6 connected to the power supply 4 for controlling the output level thereof in accordance with the level of the sensed signal so that the amplitude of vibration imparted to the sensing tip or feeler 3 varies as a function of its distance from the confronting surface or object $S$ to be detected.

As shown in Figure 5, the power supply 5 may comprise a multivibrator oscillator arrangement including a pair of transistors $T1$ and $T2$ and associated time-constant elements $C1$, $C2$, $R1$ and $R2$ energized by a voltage source 13 and having output terminals led across the collector and emitter electrodes of the transistor $T2$ connected across a pair of electrodes 14 and 15 of a quartz crystal 16 constituting the transducer 1. The latter has an additional electrode 17 connected to the base electrode of a transistor $T3$ inserted in series with the collector of the transistor $T2$. Here, the electrode 17 constitutes a sensing terminal for the transducer 16(1) and, together with transistor $T3$ and associated connections, constitutes the detector/control unit 5 as shown in Figure 4.

The crystal oscillator 16 may be prepared by sintering a mixture of 0.992 $(Pb(Mg_{1/3}Nb_{2/3})$, 0.063 TiO, 0.437 $Zr_{0.5}O_3)$ and 0.008 CoO by placing the mixture in air at a temperature of 1200°C under a pressure of 200 Kg/cm$^2$ for a period of 2 hours and heat-treating the sintered body at a temperature of 160°C under an electric field of 2 kV/mm for a period of 0.5 hour. The resulting body, when energized at a voltage of 6 volts and a current of 0.36 mA oscillates at a frequency of 6.8 kHz. When approached and contacted by an object $S$, the oscillating body is observed to sharply reduce its resonant frequency.

The decrease in resonant frequency results in a reduction in the signal level at the sensing terminal 17 which causes the effective resistance between the collector and emitter voltage of the transistor $T3$ to be increased. The collector voltage of transistor $T2$ then drops, reducing the output power of the source 13 applied to the element 1. As well known, a decrease in input power causes reduction in amplitude of vibration of the transducer 1. The amplitude of vibration is thus reduced as the feeler 3 approaches the sensing surface $S$ and the contact therebetween progresses.

In operation the sensing head 10, the input power to the transducer 1 can initially be set at an increased level to allow the feeler 3 to be vibrated with a greater amplitude. The feeler 3 then approaches the solid surface $S$ to reduce the distance between them until the feeler tip makes and breaks a slight contact with the solid surface $S$. A slightest contact can be ascertained in response to a drop in resonant frequency. The transistor $T3$ then increases its internal resistance to effectively reduce the output power level applied to the element 1. This results in a reduction in amplitude of vibration caused to the sensing tip 3 which will then be out of contact with the solid surface. An advance of the sensing tip 3 resumes its slight vibratory contact with the surface with a reduced amplitude. In this manner, the feeler 3 may continuously or successively approach the solid surface while reducing its vibrational amplitude and may be stopped when the amplitude or frequency reaches a preset level corresponding to a predetermined contacting relationship with the surface engaged thereby. For example, the amplitude of vibration may be initially set at 10 μm and may be gradually reduced to 1 μm as the tip 3 approaches the surface S or their contact progresses. This allows a measurement accuracy of ±1 μm.

The advance or feed adjustment of the sensing head may be effected either manually or automatically. The manual adjustment can be accomplished with a display which indicates measuring results while the automatic adjustment can be attained by provision of a control device fed by the detector 5 to act on a drive unit adapted to carry the sensing head 10.

The control of vibration amplitude can also be effected by modifying the input frequency, using the fact that the increase and decrease of the input frequency cause the decrease and increase of the amplitude. Thus, the input frequency can be varied from the range of 20 to 30 kHz to the range of 3 to 5 kHz as the distance between the contacting tip 3 and the contacted surface or object S is reduced.

It should be understood that the vibration of the sensing tip or feeler 3 is not limited to axial vibration and a transverse vibration can likewise be employed.

In the embodiment of Figure 6, a sensing head 20 has a sensing tip or feeler 21 carried by a supporting rod 22 having a rack 23 which is in engagement with a pinion 24 driven by a motor 25. The motor 25 may be a DC motor but is preferably a stepping motor equipped with an encoder. The rod 22 is connected to a horn 26 having a transducer 27 of magnetostrictive or piezoelectric type attached thereto which is energized by a high-frequency power supply 28 of variable frequency and amplitude. Provided in contact with the transducer 27 is a vibration sensing element 29, e.g. a microphone, which applies a sensed vibration signal to a control unit 30 via a filter/amplifier 31. The control unit 30 constitutes a drive circuit for the motor 25 and normally produces drive pulses for the latter and, in response to a signal received from the amplifier 31, terminates the pulses to stop the rotation of the motor 25. A counter display 32 registers the rotation of the motor 25 by counting drive pulses from the circuit 30 or pulses produced by the encoder in response to the motor rotation and thereby forms a display signal indicating the distance travelled by the rod 22 and the sensing tip or feeler 21. The elements 22 to 32 are shown contained in a casing 33 with the sensing tip or feeler 21 carried by the rod 22 projecting therefrom for engagement with a surface or object S, to be detected.

The transducer 27 provides a high-frequency vibration of 10 to 50 kHz with an amplitude, adjusted at the output level of the power supply 28, in the range between 0.5 to 10 μm. The horn 26 propagates the high-frequency vibration to the sensing tip or feeler 21 carried by the rod 22. The control circuit 30 has a switch (not shown) which initiates oscillation to produce drive pulses which are applied to the motor 25 to incrementally displace the rod 22 supporting the sensing tip 21. The displacement is counted in the counter circuit 32. The incremental displacement per given drive or encoded pulse is determined by the rack/pinion arrangement 23, 24 so that counting the pulse number provides a measurement of actual distance travelled by the vibrating feeler 21. The continued travel by the feeler 21 will cause its contact with the surface S. When the contact is reached, there results a change in the mode of vibration caused in the feeler 21 which is detected by the microphone 29. The latter responds to the signal which is greater in magnitude than when the tip 21 and the surface S are out of contact and the signal is fed to the amplifier 31 which provides an output signal. The control circuit responds to the latter signal to act on the motor 25 to terminate the advance of the sensing tip 21.

The vibration imparted to the sensing tip or feeler 21 is of a frequency in the range between 10 and 50 kHz as described which is much higher than the frequency of drive pulses for the motor 25 which is typically less than 1 kHz. In other words, the sensing tip 21 performs 10 to 100 cycles of reciprocation while it is displaced by one increment given by a single drive pulse of the motor 25. When the tip 21 becomes so close to the surface S that the preset amplitude of vibration allows a slight contact with the surface, it will cause making and breaking of the slight contact 10 to 100 times to allow detection of a change in the mode of vibration which accompanies the contact before the sensing head 20 is advanced the next increment. Since this detection by the microphone 29 allows an instantaneous deactivation of the feed motor 25 by the control unit 30 to block the subsequent drive pulse, the counter/display 32 provides an extremely high precision measurement.

It will be seen that in general the smaller the amplitude of vibration, the higher the precision of measurement. As in the previous embodiment, the amplitude of vibration can desirably be set initially at a greater value for successive decrease as the distance between the sensing tip 21 and the surface S is narrowed to achieve an increased reliability and accuracy of measurement. Also, it has been mentioned that the pulse motor 25 for displacement of the sensing head 20 may be replaced by a DC motor, in which case the displacement can be sensed by means of a rotary encoder or linear magnetic scale arrangement which provides encoded pulses for counting by the counter in the display unit 32.

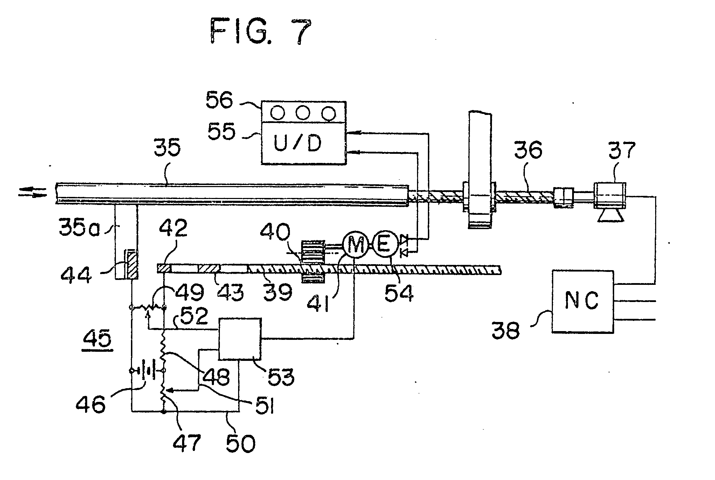

In Figure 7 there is shown a further embodiment of the position sensing system, which may be used to indicate the position of sensing heads described previously. In this system, a movable member or drive shaft 35 which may be, or may be connected with, a vibrating sensing head of previous embodiments is shown carried by a lead screw 36 driven by a motor 37 for displacement in the directions of the arrows, the motor 37 being fed with drive signals by a numerical control (NC) unit 38 which governs displacement of the movable member or drive shaft 35.

Extending spacedly in parallel with the movable member 35 is an axially displaceable sensing spindle 39 carried by a lead screw 40 which is driven by a motor 41. The spindle 39 has an electrically conductive tip member 42 attached thereto via an elastic member 43 constituting a shock absorber. The movable member or drive shaft 35 has a projection 35a fixed thereto which is formed with an electrically conductive member 44 disposed in juxtaposition with the conductive member 42. Connected across the members 42 and 44 which form a pair of electrodes is a sensing network 45 comprising a DC voltage source 46 and sensing resistors 47, 48 and 49 whose sensing terminals 50, 51 and 52 are led to a control circuit 53. Thus, the latter responds to the difference in mangnitude between a gap voltage between the electrodes 42 and 44 provided by terminals 50 and 52 and a reference voltage provided by terminals 50 and 51, thereby acting on the motor 41. Accordingly, the motor 41 is servo-controlled in response to the gap signal representing a distance between the electrodes 42 and 44 so as to be stopped when the signal reaches a preset value defined by the reference voltage. An encoder 54 detects rotary displacement of the motor 41 to provide encoded pulses of both signs representing positive and negative rotary displacements of the motor 41, the pulses being fed to an up/down counter 55 for reversible accumulation or counting therein to provide a corresponding numerical display 56.

In operation, assume that the movable member or drive shaft 35 is displaced leftward resulting in an expansion or widening of the gap between the electrodes 42 and 44. The gap widening increases the differential voltage input across the terminals 52 and 51 to the control circuit 53 which acts on the motor 41 to advance or move leftward the spindle 39 so as to reduce the gap between the electrodes 42 and 44. When the drive shaft 35 ceases displacement after travel over a given distance, the electrode 42 on the sensing spindle 39 continues the follow-up displacement to reduce the distance between it and the electrode 44 on the drive shaft 35 until a contact or electrical discharge is created between them. When this occurs, the differential signal applied to the control circuit 53 becomes nil or a preset value and the motor 41 is thereby halted to cease displacement of the spindle 39. The rotary displacement of the motor 41 representing the linear displacement of the drive shaft 35 appears on the numerical display 56 of the counter unit 55. Of course, by accelerating the rate of rotation of the motor 41, the rate of response of the follow-up spindle 39 can be accelerated so that it may move substantially as quickly as the drive shaft 35 is displaced.

Assume then that the drive shaft 35 is displaced rightward. With the electrodes 42 and 44 closer together, the balance in the sensing network 45 is lost so that the reference voltage become greater. The differential signal, then reversed in sign in the control circuit 53, causes the motor 41 to be rotated in the reverse direction so as to withdraw or move the spindle backward until, upon stoppage of the drive shaft 35, the voltage between the electrodes 42 and 44 becomes balanced with the reference voltage. The reverse rotary displacement of the motor 41 is converted by the encoder 54 into encoded pulses of negative sign which are applied to the counter 55 for subtraction of the count level previously accumulated therein. The resulting count indication on the display 56 provides accurate measurement of the displacement and position of the drive shaft or movable member 35 displaced leftward or rightward.

The drive shaft 35 may be a spindle for carrying a tool electrode in electrical discharge machines which is repetitively moved back and forth. Then the motor 41 causes the spindle 39 to follow up forwardly or backwardly while permitting its forward or backward rotary displacement to be sensed by the encoder 54 with the corresponding pulse outputs for counting by the up/down counter 55 and numerical display by the indicator 56.

It is an important feature of this embodiment that a spindle 39 is arranged so as to perform a displacement following up the displacement of a drive shaft 35 in response to voltage change between electrodes 44 and 42 carried by the moving and moved members 39 and 35. This arrangement allows an extremely accurate follow-up and ensures an excellent immunity of the sensing system to external noise, thereby enabling a measurement and display at an increased stability and precision. Additionally, the structure is relatively simplified to allow devices to be manufactured at a reduced cost.

The motor 41 need not be limited to be of DC type as described but may alternatively be a pulse or stepping motor. A voltage-frequency converter may then be used to transform the control signal from the circuit 53 to digital pulses for counting by the up-down counter 55 to provide a numerical indication of the position measured at the display 56.

It is shown that the spindle 39 is capable of following up the drive shaft 35 at a rate of response as high as 12 m/min and 6 m/min with a DC motor and a stepping motor, respectively.

**Claims**

1. A solid surface detecting device for use in a solid surface position measuring system, which device includes

(a) a position detecting or sensing probe (3, 22) carried on a support means (33, 23—25) and adapted to be moved thereby so as to advance a surface sensing tip (3A, 21) of said probe (3, 22) progressively towards and into a predetermined contact or proximity relationship with a solid surface (S) thereby to measure the position of said surface (S) or a point thereon, and

(b) a contact responsive means (5, 12, 29) for detecting when such a relationship is first established between said surface sensing tip (3A, 21) and said surface (S); and which device is characterised in that said contact responsive means comprises:—

(i) a vibration means (1, 9, 27) for inducing when energised by an external source, in said probe (3, 22) longitudinal vibrations which reiprocate repetitively said surface sensing tip (3A, 21) of said probe (3, 22) towards and away from the solid surface (S) to be sensed by said tip (3A, 21) and with an amplitude in the range 0.1 to 10 micro-metres and

(ii) a response means (5, 12, 29) responsive to modification in the mode of vibration of said probe (3, 22), and arranged to produce an output signal in response to a modification in the mode of vibration of said probe (3, 22) which occurs when said tip (3A, 21) of said probe (3, 22) on being advanced by said support means (33, 23—25) relatively to said sensed surface (S) first establishes a said relationship with said sensed solid surface (S).

2. A device as claimed in Claim 1, wherein said vibration means (1, 9, 27) includes an electromechanical transducer (1, 9, 27) connected with said probe (3, 22) and energisable by a power supply (4, 11a—11b, 28) to impart to said probe (3, 22) a high-frequency vibration of a frequency in the range 1 kHz to 50 kHz.

3. A device as claimed in Claim 2, wherein said reponse means (5, 12, 29) includes modifying means (T₃) responsive to change in proximity of said probe (3, 22) to said surface (S), for modifying the amplitude of vibration imparted to said probe (3, 22).

4. A device as claimed in Claim 3, wherein said modifying means is adapted to modify said amplitude of vibration by changing the output frequency of said power supply (4, 11a—11b, 28).

5. A device as claimed in Claim 3, wherein said modifying means (T₃) is adapted to modify said amplitude of vibration by changing the output power level of said power supply (4, 11a—11b, 28).

6. A device as claimed in any one of Claims 3 to 5, wherein said modifying means is adapted to respond to change in the resonant frequency of vibration caused in said probe (3, 22).

7. A device as claimed in Claim 1 or 2, wherein said support means includes (a) feed means for advancing said probe tip towards said surface, which feed means includes an electric motor (25) and a drive circuit (30) therefor, and (b) display means (32) for indicating rotary displacement of said electric motor (25), and wherein said drive circuit (30) is associated with said response means (29) and receives therefrom said output signal produced in response to establishment of said predetermined contact or proximity relationship between said probe tip (21) and said surface (S), and in response thereto deactivates said electric motor (25) thereby halting the advancement of said probe tip (21).

8. A device as claimed in Claim 7, wherein said electric motor (25) is a DC motor and has an encoder operatively connected therewith to convert a rotary displacement of said DC motor into a series of pulses.

9. A device as claimed in Claim 7, wherein said electric motor (25) is a stepping motor energisable by a series of drive pulses.

10. A device as claimed in Claim 8 or Claim 9, wherein said display means (32) includes counter means for accumulating said pulses and means for converting the accumulated pulses into a numerical display.

11. A device according to any preceding claim, including a measuring system for ascertaining the position of said probe (3, 22) or of a drive shaft (35) for said probe, said system being characterised by: spindle means (39) movable axially in parallel with said probe (3, 22) or shaft (35); a first electrode (44) carried on said probe (3, 22) or shaft (35); a second electrode (42) carried on said spindle means (39), said first and second electrodes being arranged to be juxtaposed with one another to form a gap therebetween; a power supply (46) for applying an electric potential across said gap; a motor means (41) for displacing said spindle means (39); means (53) for sensing the voltage across said gap to produce a control signal representing the distance between said electrodes, thereby controlling said motor means (41); and display means (56) responsive to the rotation of said motor means (41) to produce a numerical display representing the rotary displacement of said motor means.

12. A device according to any one of the Claims 3 to 6, wherein said modifying means (T₃) is arranged to reduce the amplitude of vibration imparted to said probe (3, 22) by an amount sufficient to break said contact or proximity relationship with said surface (S), whereupon further advancement of said probe (3, 22) is necessary if a said contact or proximity relationship with said surface (S) is to be reestablished.

13. A device according to any preceding claim, wherein said support means includes means for enabling said probe (3, 22) to be moved in a scanning manner relative to said surface (S).

14. A device according to Claim 2, or to any claim dependent directly or indirectly thereon, in which device said transducer (1, 16, 27) incorporates a crystal material prepared by:—

(a) sintering a mixture of 0.992 $(Pb(Mg_{1/3}Nb_{2/3})$, 0.063 TiO, 0.437 $Zr_{0.5}O_3)$ and 0.008 CoO in air at a temperature of 1200°C and under a pressure of 200 kg/cm² for a period of 2 hours to form a sintered body; and

(b) heat-treating the sintered body at a temperature of 160°C under an electric field of 2 kV/mm for a period of 0.5 hours.

15. A device according to any preceding claim, wherein said tip (3A) of said probe (3) is spherically-shaped.

16. A device according to any preceding claim, wherein said amplitude is not greater than one micro-metre.

17. A method of detecting a solid surface, which method comprises:—

(a) relatively advancing towards one another a position detecting or sensing probe (3, 22) and a said solid surface (S) so as to move a surface sensing tip (3A, 21) of said probe (3, 22) towards and into a predetermined contact or proximity relationship with said solid surface (S), and

(b) detecting when such a relationship is first established between said surface sensing tip (3A, 21) and said surface (S); and which method is characterised by:—

(i) vibrationally energising said probe (3, 22) from an external source so as to reciprocate repetitively said surface sensing tip (3A, 21) of said probe (3, 22) towards and away from said solid surface (S), and with an amplitude of 0.1 to 10 micro-metres;

(ii) sensing modification of the mode of vibration of said probe (3, 22); and

(iii) producing an output signal when on advancement of said surface sensing tip (3A, 21) relative to said surface (S), a said modification signifies that said tip (3A, 21) has established a said relationship with said solid surface (S).

18. A method according to Claim 17, wherein said amplitude is not greater than one micro-metre.

19. A method of measuring the position of a solid surface (S) of an article relative to a reference position, which method includes a surface detecting method according to Claim 17 or 18 for detecting contact of a said solid surface (S) with a surface sensing tip (3A, 21) of a probe (3, 22), said output signal being indicative of the position of said probe tip (3A, 21) when in a said relationship with said surface, and hence of said solid surface, relative to said reference position; and in which measuring method, when a modification in said mode of tip vibration is detected each time said tip (3A, 21) comes into a position giving intermittent contact thereof with said surface (s), the energisation of said probe (3, 22) is modified so as to reduce the amplitude of vibration of said tip (3A, 21) by an amount sufficient to break said intermittent contact thereof with said surface (S), whereby said tip (3A, 21) is advanced progressively and reliably to a position of closest approach to said surface (S), in which position said probe position denotes the position of said surface (S) relative to said reference position to a high degree of accuracy.

20. An apparatus for measuring, by the method according to Claim 19, the position of a solid surface (S) of an article relative to a reference position, which apparatus includes:—

(a) a surface detecting device according to any one of the Claims 1 to 16 for detecting a contact of a said solid surface (S) with a surface sensing tip (3A, 21) of a probe (3, 22), said output signal being indicative of the position of said probe tip (3A, 21) when in a said relationship with said surface, and hence of said solid surface, relative to said reference position;

(b) power supply means (4, 11a—11b, 28) for energising said vibration means (1, 9, 27) whereby to cause said tip (3A, 21) to vibrate at a given frequency when said tip (3A, 21) is not in contact with said surface (S);

(c) advancing means (23, 25) for relatively advancing said support means (33, 23—25) and said tip (3A, 21) towards said surface (S) of an article;

(d) indicating means (32, 56) for indicating the position of said probe relative to said reference position when a said modification in said mode of vibration is detected;

and in which apparatus, said power supply means (4, 11a—11b, 28) is controlled by said response means (5, 12, 29) in a manner such that when a modification in said mode of vibration is detected each time said tip (3A, 21) comes into a position giving intermittent contact thereof with said surface (S), the energisation of said vibration means (1, 9, 27) is modified so as to reduce the amplitude of vibration of said tip (3A, 21) by an amount sufficient to break said intermittent contact thereof with said surface (S), whereby said tip (3A, 21) is advanced progressively and reliably to a position of closest approach to said surface (S), in which position said probe position denotes the position of said surface relative to said reference position to a high degree of accuracy.

## Revendications

1. Dispositif de détection d'une surface solide destiné à être utilisé dans un système de mesure de la position d'une surface solide, ce dispositif comportant:

(a) une sonde de détection de position (3, 22) portée par un support (33, 23—25 et adaptée de manière à être déplacée par celui-ci pour faire avancer une pointe de détection de surface (3A, 21) de cette sonde (3, 22) progressivement en direction d'une surface solide (c'est-à-dire rigide), pour l'amener dans une relation de proximité ou de contact prédéterminée avec cette surface (S), et ce afin de mesurer la position de cette surface (S) ou bien un point sur cette surface, et

(b) un moyen répondant à un contact (5, 12, 29) pour détecter le moment où la relation précitée est établie entre la pointe de détection de surface (3A, 21) et ladite surface (S); caractérisé en ce que le moyen répondant au contact comprend

(i) un moyen générateur de vibrations (1, 9, 27) pour induire dans la sonde (3, 22), lorsqu'il est excité par une source externe, des vibrations longitudinales qui entraînement un mouvement alternatif répété de la pointe de détection de surface (3A, 21) de la sonde (3, 22), en direction de la surface solide (S) devant être détectée par la pointe (3A, 21) et en s'éloignant de cette surface, et ce avec une amplitude comprise dans la gamme allant de 0,1 à 10 microns et

(ii) un moyen de réponse (5, 12, 29) répondant à une modification du mode de vibration de la sonde (3, 22) et disposé de manière à produire un signal de sortie en réponse à une modification du mode de vibration de la sonde (3, 22) qui apparaît lorsque la pointe (3A, 21) de la sonde (3, 22) établit tout d'abord, lorsqu'elle est avancée par le support (33, 23—25) par rapport à la surface détectée S, ladite relation avec la surface solide détectée.

2. Dispositif suivant la revendication 1 caractérisé en ce que le moyen générateur de vibrations (1, 9, 27) comporte un transducteur électromécanique (1, 9, 27) connecté à la sonde (3, 22) et pouvant être excité par une source d'énergie électrique (4, 11a—11b, 28) pour appliquer à la sonde (3, 22) une vibration à haute fréquence dont la fréquence est comprise dans la gamme allant de 1 kHz à 50 kHz.

3. Dispositif suivant la revendication 2 caractérisé en ce que le moyen de réponse (5, 12, 29) comporte un moyen modificateur ($T_3$) répondant à un changement de proximité de la sonde (3, 22) par rapport à la surface (S), en modifiant l'amplitude de la vibration appliquée à la sonde (3, 22).

4. Dispositif suivant la revendication 3 caractérisé en ce que le moyen modificateur est adapté de manière à modifier l'amplitude de la vibration en changeant la fréquence de sortie de la source d'énergie électrique (4, 11a—11b, 28).

5. Dispositif suivant la revendication 3 caractérisé en ce que le moyen modificateur ($T_3$) est adapté de manière à modifier l'amplitude de la vibration en changeant le niveau de la puissance de sortie de la source d'énergie électrique (4, 11a—11b, 28).

6. Dispositif suivant l'une quelconque des revendications 3 à 5 caractérisé en ce que le moyen modificateur est adapté de manière à répondre à un changement de la fréquence de résonance de la vibration engendrée dans la sonde (3, 22).

7. Dispositif suivant l'une quelconque des revendications 1 et 2 caractérisé en ce que le support comporte (a) des moyens d'avancement pour faire avancer la pointe de la sonde en direction de la surface, ces moyens d'avancement comportant un moteur électrique (25) et un circuit d'alimentation (30) pour celui-ci, et (b) des moyens d'affichage (32) pour indiquer le déplacement en rotation de ce moteur électrique (25), le circuit d'alimentation (30) étant associé aux moyens de réponse (29) pour recevoir le signal de sortie en réponse à l'établissement du contact prédéterminé ou de la relation de proximité prédéterminée entre la pointe (21) de la sonde et ladite surface (S), afin de désexciter le moteur électrique (25) et de stopper l'avancement de la pointe (21) de la sonde.

8. Dispositif suivant la revendication 7 caractérisé en ce que le moteur électrique (25) est un moteur à courant continu et il comporte un codeur qui lui est connecté opérationnellement afin de convertir un déplacement en rotation de ce moteur à courant continu en une série d'impulsions.

9. Dispositif suivant le revendication 7 caractérisé en ce que le moteur électrique (25) est un moteur pas à pas pouvant être excité par un série d'impulsions d'entraînement.

10. Dispositif suivant l'une quelconque des revendications 8 et 9, caractérisé en ce que les moyens d'affichage (32) comportent un compteur pour totaliser les impulsions et des moyens pour convertir les impulsions totalisées en un affichage numérique.

11. Dispositif suivant l'une quelconque des revendications précédentes comportant un système de mesure pour mesurer la position de la sonde (3, 22) ou bien d'un arbre d'entraînement (35) de ladite sonde, caractérisé en ce qu'il comprend une broche (39) mobile axialement et parallèlement à la sonde (3, 22) ou à l'arbre (35), une première électrode (44) portée par la sonde (3, 22) ou l'arbre (35), une seconde électrode (42) portée par la broche (39), ces première et seconde électrodes étant disposées de manière à être en regard l'une de l'autre pour déterminer entre elles un intervalle, une source d'alimentation électrique (46) pour appliquer un potentiel électrique en travers de cet intervalle, un moteur (41) pour déplacer la broche (39), des moyens (53) pour détecter la tension en travers de cet intervalle afin de produire un signal de commande représentant la distance entre les électrodes et pour commander ainsi le moteur (41), et des moyens d'affichage (56) répondant à la rotation du moteur (41) en produisant un affichage numérique représentant le déplacement en rotation de ce moteur.

12. Dispositif suivant l'une quelconque des revendications 3 à 6 caractérisé en ce que le moyen modificateur ($T_3$) est disposé de manière à réduire l'amplitude de la vibration appliquée à la sonde (3, 22) d'une quantité suffisante pour interrompre le contact ou la relation de proximité avec la surface (S), si bien qu'un avancement additionnel de la sonde (3, 22) est nécessaire si le contact ou la relation de proximité avec la surface (S) doit être rétabli.

13. Dispositif suivant l'une quelconque des revendications précédentes caractérisé en ce que le support comporte des moyens pour permettre à la sonde (3, 22) d'être déplacée en effectuant un balayage par rapport à la surface (S).

14. Dispositif suivant la revendication 2 ou l'une quelconque des revendications qui en dépendent directement ou indirectement, caractérisé en ce que le transducteur (1, 16, 27) de ce dispositif comporte un matériau de cristal préparé en:

(a) frittant un mélange de 0,992 de $(Pb(Mg_{1/3}Nb_{2/3})$, 0,063 de TiO, 0,437 de $(Zr_{0,5}O_3)$ et 0,008 de CoO, dans l'air à une température de 1200°C, sous une pression de 200 Kg/cm², pendant une période de 2 heures, pour former une masse frittée; et

(b) en traitant à chaud la masse frittée à une température de 160°C sous un champ électrique de 2 kV/mm pendant une période de 0,5 heure.

15. Dispositif suivant l'une quelconque des revendications précédentes caractérisé en ce que la pointe (3A) de la sonde (3) a une forme sphérique.

16. Dispositif suivant l'une quelconque des revendications précédentes caractérisé en ce que l'amplitude des vibrations n'est pas supérieure à un micron.

17. Procédé de détection d'une surface solide qui consiste:

(a) à faire avancer l'une en direction de l'autre, d'une mouvement relatif, une sonde de détection de position (3, 22) et ladite surface solide (S) de manière à déplacer une pointe de détection de surface (3A, 21) de la sonde (3, 22) en direction de la surface solide (S), pour l'amener en contract prédéterminé ou dans une relation de proximité prédéterminée avec cette surface, et

(b) à détecter le moment où une telle relation est établie entre la pointe de détection de surface (3A, 21) et ladite surface (S) caractérisé en ce que:

(i) on excite d'une manière vibratoire, à partir d'une source extérieure, la sonde (3, 22) de manière à déplacer alternativement, d'une manière répétée, la pointe de détection de surface (3A, 21) de la sonde (3, 22) en direction de la surface solide (S) et en l'éloignant de cette surface, et ce avec une amplitude comprise dans la gamme allant de 0,1 à 10 microns;

(ii) on détecte une modification du mode de vibration de la sonde (3, 22); et

(iii) on produit un signal de sortie lorsque, lors de l'avancement de la pointe de détection de surface (3A, 21) par rapport à la surface solide (S), cette modification signifie que la pointe (3A, 21) a établi ladite relation avec la surface solide (S).

18. Dispositif suivant la revendication 17 caractérisé en ce que l'amplitude n'est pas supérieure à un micron.

19. Procédé de mesure de la position d'une surface solide (S) d'un article par rapport à une position de référence, caractérisé en ce qu'il comporte un procédé de détection de surface suivant la revendication 17 ou 18 pour détecter le contact de ladite surface solide (S) avec une pointe de détection de surface (3A, 21) d'une sonde (3, 22), le signal de sortie indiquant la position de la pointe (3A, 21) de la sonde, lorsqu'elle se trouve dans ladite relation prédéterminée par rapport à la surface, et indiquant ainsi la position de la surface solide par rapport à la position de référence, procédé dans lequel, lorsqu'une modification du mode de vibration de la pointe est détectée chaque fois que cette pointe (3a, 21) vient dans une position donnant lieu à un contact intermittent de la pointe avec la surface (S), l'excitation de la sonde (3, 22) est modifiée de manière à réduire l'amplitude de la vibration de la pointe (3A, 21) d'une quantité suffisante pour interrompre le contact intermittent de cette pointe avec la surface (S), si bien que la pointe (3A, 21) est avancée progressivement et d'une manière fiable vers une position plus proche de la surface (S), position dans laquelle la position de la sonde danne, avec un degré élevé de précision, la position de la surface (S) par rapport à la position de référence.

20. Appareil pour mesurer, par le procédé suivant la revendication 19, la position d'une surface solide (S) d'un article par rapport à une position de référence, caractérisé en ce qu'il comporte:

(a) un dispositif de détection de surface suivant l'une quelconque des revendications 1 à 16, pour détecter un contact de la surface solide (S) avec une pointe de détection de surface (3A, 21) d'une sonde (3, 22), ledit signal de sortie indiquant la position de la pointe (3A, 21) de la sonde lorsqu'elle se trouve dans ladite relation déterminée par rapport à la surface, et indiquant par conséquent la position de la surface solide par rapport à la position de référence;

(b) des moyens d'alimentation électrique (4, 11a—11b, 28) pour exciter les moyens générateurs de vibrations (1, 9, 27) de manière à amener la pointe (3A, 21) à vibrer à une fréquence déterminée lorsque cette pointe (3A, 21) n'est pas en contact avec la surface (S);

(c) des moyens d'avancement (23, 25) pour faire avancer relativement le support (33, 23—25) et la pointe (3A, 21) en direction de la surface (S) d'un article;

(d) des moyens indicateurs (32, 56) pour indiquer la position de la sonde par rapport à la position de référence lorsque ladite modification du mode de vibration est détectée;

les moyens d'alimentation électriques (4, 11a—11b, 28) étant commandés par les moyens de réponse (5, 12, 29) de manière que, lorsqu'une modification du mode de vibration est détectée chaque fois que la pointe (3A, 21) vient dans une position donnant lieu à un contact intermittent entre cette pointe et ladite surface (S), l'excitation des moyens générateurs de vibrations (1, 9, 27) est modifiée de manière à réduire l'amplitude de la vibration de la pointe (3A, 21) d'une quantité suffisante pour interrompre le contact intermittent de cette pointe avec la surface (S), si bien que la pointe (3A, 21)

est avancée progressivement et sûrement vers une position plus proche de la surface (S), position dans laquelle la position de la sonde donne, avec une degré de précision élevé, la position de ladite surface par rapport à la position de référence.

**Patentansprüche**

1. Meßvorrichtung für ein Positionsmeßsystem für Festkörperoberflächen mit

(a) einem Positionsfühler (3, 22) mit einem Fühlerkopf (3A, 21), der mit Hilfe seiner Halterung (33, 23—25) fortschreitend auf eine Festkörperoberfläche (S) zubewegbar und in eine vorgegebene Kontakt- oder Näherungsbeziehung mit dieser zu bringen ist, um die Position der Oberfläche (S) oder die Position einer auf der Oberfläche befindlichen Stelle zu messen und

(b) einer Ansprecheinrichtung (5, 12, 29), die auf eine erste Kontakt- oder Näherungsbeziehung zwischen dem Fühlerkopf (3A, 21) und der Oberfäche (S) anspricht dadurch gekennzeichnet, daß die Ansprecheinrichtung

(i) einen Schwingungserzeuger (1, 9, 27) umfaßt, der erregbar durch eine Energiequelle in dem Positionsfühler (3, 22) längsgerichtete Schwingungen erzeugt, durch die der Fühlerkopf (3A, 21) des Positionsfühlers (3, 22) mit einer Amplitude im Bereich von 0,1—10 µm widerholt auf die zu messende Oberfläche (S) zu und von dieser wieder wegbewegt wird und

(ii) die Ansprecheinrichtung (5, 12, 29) aufgrund einer Schwingungsänderung des Positionsfühlers (3, 22) ein Ausgangssignal aussendet, wobei die Schwingungsänderung eintritt, wenn der Fühlerkopf (3A, 21) des Positionsfühlers (3, 22), der mit Hilfe seiner Halterung (33, 23—25) relativ zu der zu bestimmenden Oberfläche (S) vorgerückt wird, zum ersten Mal die vorgegebene Kontakt- oder Näherungsbeziehung mit der zu bestimmenden Oberfläche (S) erzielt.

2. Vorrichtung nach Anspruch 1, dadurch gekennzeichnet, daß der Schwingungserzeuger (1, 9, 27) einen elektromechanischen Übertrager (1, 9, 27) umfaßt, der mit dem Positionsfühler (3, 22) verbunden und durch eine Energiequelle (4, 11a—11b, 28) erregbar ist, um dem Positionsfühler (3, 22) eine hochfrequente Schwingung einer Frequenz im Bereich von 1 kHz bis 50 kHz aufzuprägen.

3. Vorrichtung nach Anspruch 2, dadurch gekennzeichnet, daß die Ansprecheinrichtung (5, 12, 29) eine Modifiziereinrichtung (T₃) um faßt, die auf eine Änderung des Abstandes des Positionsfühlers (3, 22) von der Oberfläche (S) anspricht, um die Schwingungsamplitude, die dem Positionsfühler (3, 22) aufgeprägt wird, zu ändern.

4. Vorrichtung nach Anspruch 3, dadurch gekennzeichnet, daß die Modifiziereinrichtung (T₃) dazu geeignet ist, die Schwingungsamplitude durch Änderung der Ausgangsfrequenz der Energiequelle (4, 11a—11b, 28) zu verändern.

5. Vorrichtung nach Anspruch 3, dadurch gekennzeichnet, daß die Modifiziereinrichtung (T₃) derart ausgebildet ist, daß die Schwingungsamplitude durch Änderung des Pegels der Ausgangsleistung der Energiequelle (4, 11a—11b, 28) veränderbar ist.

6. Vorrichtung nach einem der Ansprüche 3 bis 5, dadurch gekennzeichnet, daß die Modifiziereinrichtung derart ausgebildet ist, daß sie auf eine Änderung der Resonanzfrequenz der in dem Positionsfühler (3, 22) verursachten Schwingung anspricht.

7. Vorrichtung nach Anspruch 1 oder 2, dadurch gekennzeichnet, daß

(a) eine Stelleinrichtung vorgesehen ist, die dazu dient, den Positionsfühler in Richtung auf die Oberfläche (S) vorzurücken, wobei die Stelleinrichtung einen Elektromotor (25) und eine mit diesem verbundene Treiberschaltung (30) umfaßt und daß (b) eine Anzeigevorrichtung (32), vorgesehen ist, die dazu dient, eine Verdrehung des Elektromotors (25) anzuzeigen, wobei die Treiberschaltung (30) mit der Ansprechvorrichtung (29) funktionell verbunden ist, um das von der Ansprecheinrichtung nach Erzielung der vorgegebenen Kontakt- oder Näherungsbeziehung zwischen dem Fühlerkopf (21) und der Oberfläche (S) ausgesandte Ausgangssignal zu empfangen und daraufhin den Elektromotor (25) abzuschalten, so daß ein weiteres Vorrücken des Fühlerkopfes (21) unterbleibt.

8. Vorrichtung nach Anspruch 7, dadurch gekennzeichnet, daß der Elektromotor (25) ein Gleichstrommotor ist, der mit einem Encoder funktionell verbunden ist, um eine Verdrehung des Gleichstrommotors durch eine Pulsreihe wiederzugeben.

9. Vorrichtung nach Anspruch 7, dadurch gekennzeichnet, daß der Elektromotor (25) ein Schrittmotor ist, der mittels einer Folge von Antriebspulsen erregbar ist.

10. Vorrichtung nach Anspruch 8 oder 9, dadurch gekennzeichnet, daß die Anzeigevorrichtung (32) einen Zähler umfaßt, der dazu dient, die Pulse zu summieren und ferner eine Vorrichtung zu numerischen Wiedergabe der summierten Pulse enthält.

11. Vorrichtung nach einem der vorhergehenden Ansprüche mit einer Meßanordnung zur Positionsbestimmung des Positionsfühlers (3, 22) oder einer Antriebswelle (35) für den Positionsfühler, gekennzeichnet durch eine Spindel (39), die in axialer Richtung parallel zum Positionsfühler (3, 22) oder zur Welle (35) bewegbar ist, ferner gekennzeichnet durch eine erste Elektrode (44), die auf dem Positionsfühler (3, 22) oder auf der Welle (35) vorgesehen und eine zweite Elektrode (42), die auf der Spindel (39) angeordnet ist, wobei die erste und die zweite Elektrode derart einander gegenüberliegend angeordnet sind, daß sie zwischen sich einen Spalt definieren, daß ferner eine Energiequelle (46) vorgesehen ist, die dazu dient, über dem Spalt ein Elektrisches Potential auszubilden daß weiterhin ein Motor (41) zur Verschiebung der Spindel (39), eine Vorrichtung (53) zur Bestimmung der am Spalt vorliegenden Spannung, die dazu geeignet ist, ein Steuersignal auszusenden, welches den Abstand zwischen den Elektroden repräsentiert und den Motor (41) steuert, und eine Anzeigevorrichtung (56), die nach Maßgabe der Drehung des Motors (41) numerisch die Motordrehung anzeigt, vorgesehen sind.

12. Vorrichtung nach einem der Ansprüche 3 bis 6 dadurch gekennzeichnet, daß die Modifiziereinrichtung (T₃) dazu dient, die Schwingungsamplitude des Positionsfühlers (3, 22) bis zu einer Unterbrechung der Kontakt- oder Näherungsbeziehung zwischen dem Positionsfühler und der Oberfläche (S) zu verringern und daß, sofern eine erneute Kontakt- oder Näherungsbeziehung mit der Oberfläche (S) hergestellt werden soll, ein erneutes Vorrücken des Positionsfühlers (3, 22) erfolgt.

13. Vorrichtung nach einem der vorhergehenden Ansprüche, dadurch gekennzeichnet, daß die Halterung eine Vorrichtung umfaßt, mit der der Positionsfühler (3, 22) zur Abtastung relativ zur Oberfläche (S) bewegbar ist.

14. Vorrichtung nach Anspruch 2 oder einem mittelbar oder unmittelbar darauf zurückbezogenen Anspruch mit einem ein Kristallmaterial enthaltenen, elektromechanischen Übertrager (1, 16, 27), dadurch gekennzeichnet, daß das Kristallmaterial

(a) durch Sintern einer Mischung aus 0,992 (Pb(Mg$_{1/3}$Nb$_{2/3}$), 0,063 TiO, 0,437 Zr$_{0,5}$O$_3$) und 0,008 CoO in Luft, bei einer Temperatur von 1,200°C und unter einem Druck von 200 kg/cm$^2$ für die Dauer von zwei Stunden zur Bildung eines Sinterkörpers und

(b) durch Wärmebehandlung des Sinterkörpers bei einer Temperatur von 160°C bei einem elektrischen Feld von 2 kV/mm während 0,5 Stunden hergestellt wird.

15. Vorrichtung nach einem der vorgehenden Ansprüche, dadurch gekennzeichnet, daß der Fühlerkopf (3A) des Positionsfühlers (3) kugelförmig ausgebildet ist.

16. Vorrichtung nach einem vorhergehenden Ansprüche, dadurch gekennzeichnet, daß die Amplitude nicht größer als 1 $\mu$m ist.

17. Verfahren zur Positionsmessung einer Festkörperoberfläche bei dem

(a) ein Positionsfühler (3, 22) und eine Festkörperoberfläche (S) relativ aufeinander zubewegt werden, um einen Fühlerkopf (3A, 21) des Positionsfühlers (3, 22) in eine vorgegebene Kontakt- oder Näherungsbeziehung zu der Oberfläche (S) zu bringen und

(b) angezeigt wird, wenn eine Solche Relation zwischen dem Fühlerkopf (3A, 21) und der Oberfläche (S) zum ersten Mal erzielt wird, dadurch gekennzeichnet, daß

(i) der Positionsfühler (3, 22) durch eine Schwingungsquelle zu Schwingungen angeregt wird, so daß der Fühlerkopf (3A, 21) des Positionsfühlers (3, 22) mit einer Amplitude von 0,1 bis 10 $\mu$m wiederholt auf die Oberfläche (S) und von dieser fortbewegt wird,

(ii) die Schwingungsänderung des Positionsfühlers (3, 22) festgestellt wird und

(iii) eine Ausgangssignal erzeugt wird, sobald die sich aufgrund des Vorrückens des Fühlerkopfes (3A, 21) relativ zur Oberfläche (S) ergebende Schwingungsänderung anzeigt, daß der Fühlerkopf (3A, 21) die vorgegebene Kontakt- oder Näherungsbeziehung mit der Oberfläche (S) erreicht hat.

18. Verfahren nach Anspruch 17, dadurch gekenzeichnet, daß die Amplitude 1 $\mu$m nicht übersteigt.

19. Verfahren zur Positionsbestimmung einer Festkörperoberfläche (S) relativ zu einer Bezugsposition unter Anwendung des Verfahrens zur Anzeige eines Kontaktes zwischen einer Festkörperoberfläche (S) und einem Fühlerkopf (3A, 21) eines Positionsfühlers (3, 22) nach einem der Ansprüche 17 oder 18, dadurch gekennzeichnet, daß das Ausgangssignal anzeigt, sobald sich der Fühlerkopf (3A, 21) in Kontakt mit der Oberfläche (S) befindet und damit auch die Lage der Oberfläche relativ zu der Bezugsposition anzeigt, daß ferner, sobald der Fühlerkopf (3A, 21) erneut in eine Stellung gelangt, in der er sich mit der Oberfläche (S) in intermittierendem Kontakt befindet und dies durch eine Schwingungsänderung im Fühlerkopf angezeigt wird, die Schwingungserregung des Positionsfühlers (3, 22) derart verändert wird, daß die Schwingungsamplitude des Fühlerkopfes (3A, 21) soweit reduziert wird, bis der intermittierende Kontakt zwischen dem Fühlerkopf (3A, 21) und der Oberfläche (S) unterbrochen wird, wodurch der Fühlerkopf (3A, 21) schrittweise und betriebssicher in eine Stellung vorgerückt wird, die der größten Annäherung an die Oberfläche (S) entspricht und der Positionsfühler die Lage die Oberfläche (S) relativ zu der Bezugsposition mit hoher Genauigkeit angibt.

20. Vorrichtung zur Positionsbestimmung einer Festkörperoberfläche (S) relativ zu einer Bezugsposition nach dem Verfahren gemäß Anspruch 19, gekennzeichnet durch

(a) eine Meßvorrichtung nach einem der Ansprüche 1 bis 16 zur Anzeige einer Kontaktbeziehung zwischen einer Festkörperoberfläche (S) und einem Fühlerkopf (3A, 21) eines Positionsfühlers (3, 22), deren Ausgangssignal die Stellung des Fühlerkopfes (3A, 21), sobald sich dieser in Kontaktbeziehung mit der Oberfläche befindet, und damit auch die Stellung der Oberfläche relativ zur Bezugsstelle anzeigt,

(b) eine Energiequelle (4, 11a—11b, 28) zur Erregung des Schwingungserzeugers (1, 9, 27), um den Fühlerkopf (3A, 21) mit einer vorgegebenen Schwingungsfrequenz zu erregen, wenn dieser die Oberfläche (S) nicht berührt.

(c) eine Stelleinrichtung (23, 25) für eine relative Annäherung der Haltevorrichtung (33, 23—25) mit dem Fühlerkopf (3A, 21) und der Festkörperoberfläche (S) und

**0 006 022**

(d) eine Anzeigevorrichtung (32, 56) zur Anzeige der Lage des Positionsfühlers (3, 22) relativ zu der Bezugsposition sobald eine Schwingungsänderung festgestellt wird, wobei die Energiequelle (4, 11a—11b, 28) durch die Ansprecheinrichtung (5, 12, 29) derart steuerbar ist, daß beir Anzeige einer Schwingungsänderung, die jedes Mal wieder eintritt wenn der Fühlerkopf (3A, 21) in intermittierenden Kontakt mit der Oberfläche (S) gelangt, die Erregung des Schwingungserzeugers (1, 9, 27) in dem Sinne geändert wird, daß sich die Schwingungsamplitude des Fühlerkopfes (3A, 21) soweit verringert, bis der intermittierende Kontakt mit der Oberfläche (S) unterbrochen wird, wodurch der Fühlerkopf (3A, 21) fortschreitend und betriebssicher in eine Stellung vorgerückt wird, die der größten Annäherung an die Oberfläche (S) entspricht, in der die Position des Positionsfühlers die Position der Oberfläche relativ zu der Bezugsposition mit hoher Genauigkeit anzeigt.

FIG. 1

FIG. 2

FIG. 3

# FIG. 4

# FIG. 5

# FIG. 6

# FIG. 7